# EUROPEAN PATENT APPLICATION

(11) **EP 4 564 508 A1**
(43) Date of publication of application: **04.06.2025**
(21) Application number: 23846815.1
(22) Date of filing: 23.06.2023
(51) Int. Cl.: H01M 10/0562, C01G 25/00, C01G 23/00, C01B 25/14

(54) **SOLID ELECTROLYTE AND METHOD FOR PREPARING SAME**

(30) Priority: 29.07.2022 KR 20220094981
(71) Applicant: SAMSUNG SDI CO., LTD., Yongin-si, Gyeonggi-do 17084 (KR); Hyundai Motor Company, Seoul 06797 (KR); Kia Corporation, Seoul 06797 (KR)
(72) Inventor: YUN, Pilsang, Yongin-si, Gyeonggi-do 17084 (KR); KIM, Hyunbeom, Yongin-si, Gyeonggi-do 17084 (KR); HONG, Suk-Gi, Yongin-si, Gyeonggi-do 17084 (KR); HA, Myeongju, Yongin-si, Gyeonggi-do 17084 (KR); YANG, Hwichul, Yongin-si, Gyeonggi-do 17084 (KR)
(74) Representative: Gulde & Partner
(86) International application number: PCT/KR2023/008743
(87) International publication number: WO 2024/025156

(57) **Abstract**

Disclosed are a solid electrolyte and a method for preparing the same, the solid electrolyte includes sulfide-based solid electrolyte particles and the lithium-metal-oxide on the surface of the particles, wherein in an X-ray diffraction (XRD) analysis of the solid electrolyte, a full width at half maximum (FWHM) of a main peak is less than or equal to 0.160.

## Description

### [Technical Field]

A solid electrolyte and a preparing method of the same are disclosed.

### [Background Art]

Recently, as a risk of explosion of a battery using a liquid electrolyte has been reported, development of an all-solid-state battery has been actively conducted. However, a solid electrolyte, compared with the liquid electrolyte, has problems of low ion conductivity, resistance on the interface with solid particles of a positive electrode active material and the like in a battery, deterioration of the ion conduction performance by formation of a depletion layer by solid-to-solid bonding, and the like.

In order to solve these problems, conventionally techniques of doping various elements into the positive electrode active material particles used with the solid electrolyte and forming a buffer layer including an element such as B, Nb, Zr, and the like on the surface of the positive electrode active material particles have been used. However, these methods may have difficulties in mass production, cause coat and environmental problems, and still have limitations in improving performance of the all-solid-state battery.

Accordingly, development of a solid electrolyte having high ion conductivity and an appropriate particle size distribution is required.

### [Disclosure]

A solid electrolyte having a uniform particle size distribution, high crystallinity and high ion conductivity, and improved moisture stability and a method for preparing the same are provided.

In an embodiment, a solid electrolyte includes sulfide-based solid electrolyte particles and lithium-metal-oxide on the surface of the sulfide-based solid electrolyte particles, wherein in an X-ray diffraction (XRD) analysis of the solid electrolyte, a full width at half maximum (FWHM) of a main peak is less than or equal to 0.160.

Another embodiment provides a method for preparing a solid electrolyte comprising mixing sulfide-based solid electrolyte particles and lithium-metal-oxide and performing heat treatment at 250 °C to 350 °C.

The solid electrolyte according to an embodiment has a uniform particle size distribution, high crystallinity and ion conductivity, and improved moisture stability.

### [Description of the Drawings]

FIG. 1 is a particle size distribution curve for solid electrolytes of Example 2, Comparative Example 1, and Comparative Example 2.
FIG. 2 is a particle size distribution curve for the solid electrolytes of Example 2, Example 3, Example 4 and Comparative Example 2.
FIG. 3 is an X-ray diffraction graph of the solid electrolyte and lithium-zirconium-oxide (LZO) of Examples 1, 2, and 5 and Comparative Examples 1 and 2.
FIG. 4 is an X-ray diffraction graph of the solid electrolytes of Examples 2 to 4 and Comparative Example 1, LZO, lithium-aluminum-oxide (LAO), and lithium-titanium-oxide (LTO).
FIG. 5 is a graph showing the half-width at half maximum of the main peak (bar graph, left vertical axis) and ion conductivity (dotted line graph, right vertical axis) in X-ray diffraction analysis of the solid electrolytes of Examples 1 to 5 and Comparative Examples 1 to 2.
FIG. 6 is a moisture stability evaluation graph for the solid electrolytes of Examples 1, 2, and 5 and Comparative Example 2, and is a graph showing ion conductivity before and after being left for 3 days.
FIG. 7 is a moisture stability evaluation graph for the solid electrolytes of Examples 2 to 4 and Comparative Example 2, and is a graph showing ion conductivity before and after being left for 3 days.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron microscopic photograph or a scanning electron microscopic photograph. Alternatively, it is possible to obtain an average particle diameter value by measuring a size using a dynamic light scattering method, performing data analysis, counting the number of particles for each particle size range, and calculating from this. The average particle diameter may be measured with a microscope image or a particle size analyzer, and may mean a diameter (D50) of particles having a cumulative volume of 50 volume% in a particle size distribution.

Herein, "or" is not to be construed as an exclusive meaning, for example, "A or B" is construed to include A, B, A+B, and the like.

### Preparing Method of Solid Electrolyte

An embodiment provides a method for preparing a solid electrolyte including mixing sulfide-based solid electrolyte particles and lithium-metal-oxide and performing heat treatment at 250 °C to 350 °C.

In general, a solid electrolyte should have an appropriate particle size distribution to exhibit excellent ion conduction performance in a battery and implement high energy density, and should implement excellent particle fluidity, that is, a high-density electrode plate and electrolyte film. At the same time, the solid electrolyte should be able to exhibit improved ion conductivity by maintaining high crystallinity.

A sulfide-based solid electrolyte is a material capable of realizing high ion conductivity among various solid electrolytes. Immediately after synthesis at a high temperature, since the particles are severely agglomerated or have a large particle size, it is necessary to pulverize them. However, the ion conductivity decreases due to the pulverizing operation, and if heat treatment is performed to increase the ion conductivity, the particles re-aggregate and grow.

In an embodiment, in order to solve these problems, heat treatment is performed in a temperature range of 250 °C to 350 °C while coating lithium-metal-oxide on pulverized sulfide-based solid electrolyte particles. According to this method, the crystallinity of the solid electrolyte is increased, the ion conductivity is improved, and at the same time, particle aggregation and growth are suppressed, so that a high-density electrode plate and electrolyte film may be implemented with an appropriate particle size distribution. Such a solid electrolyte also has high moisture stability, and can improve capacity characteristics, initial charge/discharge efficiency, and cycle-life characteristics of a battery.

In the heat treatment, for example, if the heat treatment is performed at a temperature of less than 250 °C, crystallinity may not be sufficiently increased, and thus high ion conductivity may not be realized. In addition, when heat treatment is performed at a temperature greater than 350 °C, aggregation and growth of particles occur, so that an appropriate particle size distribution is not obtained, and thus crystallinity is lowered. The higher the heat treatment at a higher temperature, the more coating agents are required, which may cause a problem in that the ion conductivity is rather deteriorated.

The heat treatment may be performed in a nitrogen atmosphere or an inert gas such as He, Ar, or N₂. In addition, the heat treatment may be performed for 0.5 to 10 hours, for example, for 1 to 8 hours. In the case of heat treatment under these conditions, the prepared solid electrolyte can realize an appropriate particle size distribution while exhibiting excellent ion conductivity.

The lithium-metal-oxide may be mixed in an amount of 0.01 parts by weight to 3 parts by weight, for example 0.01 parts by weight to 2 parts by weight, 0.01 parts by weight to 1 part by weight, 0.01 parts by weight to 0.8 parts by weight, or 0.1 parts by weight to 0.75 parts by weight based on 100 parts by weight of the sulfide-based solid electrolyte particles. When mixed in this content range, the prepared solid electrolyte may have an appropriate particle size distribution without particle size aggregation while exhibiting high ion conductivity. In particular, if 0.01 parts by weight to 0.8 parts by weight of lithium-metal-oxide is mixed based on 100 parts by weight of sulfide-based solid electrolyte particles, the surface of the sulfide-based solid electrolyte is evenly coated with an appropriate amount of lithium-metal-oxide to further improve the ion conductivity of the solid electrolyte.

A method for preparing a solid electrolyte according to an embodiment includes, for example, mixing and heat-treating sulfur-containing raw materials to synthesize a sulfide-based solid electrolyte, pulverizing the synthesized sulfide-based solid electrolyte, and mixing the pulverized sulfide-based solid electrolyte particles and lithium-metal-oxide and performing heat treatment at 250 °C to 350 °C to obtain a solid electrolyte in which lithium-metal-oxide is disposed on the surface of the sulfide-based solid electrolyte particles.

In an embodiment, mixing and heat-treating sulfide-based solid electrolyte particles and lithium-metal-oxide may be referred to as a type of dry coating method. That is, the method of preparing the solid electrolyte according to an embodiment is a method of coating sulfide-based solid electrolyte particles, and may be, for example, a method of dry-coating lithium-metal-oxide on the surface of sulfide-based solid electrolyte particles. Unlike other oxide-based inorganic solid electrolytes or positive electrode active materials, sulfide-based solid electrolytes have characteristics that wet coating is difficult and vulnerable to high-temperature heat treatment, and thus the sulfide-based solid electrolytes require a design for difficult coating conditions. In addition, in general, wet coating methods use alcohol-based solvents or alkoxide-based raw materials, and accordingly, carbon components remain locally after coating, which may adversely affect conductivity and the like. The method of preparing a solid electrolyte according to an embodiment has different conditions from coating other types of solid electrolyte particles, and is also distinguished from general wet coating.

### Sulfide-based Solid Electrolyte Particles

The sulfide-based solid electrolyte particles may be, for example, Li₂S-P₂S₅, Li₂S-P₂S₅-LiX (X is a halogen element, for example, I or Cl), Li₂S-P₂S₅-Li₂O, Li₂S-P₂S₅-Li₂O-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-LiI, Li₂S-B₂S₃, Li₂S-P₂S₅-ZₘSₙ (m and n is each an integer and Z is Ge, Zn or Ga), Li₂S-GeS₂, Li₂S-SiS₂-Li₃PO₄, Li₂S-SiS₂-LiₚMO_{q} (p and q are integers and M is P, Si, Ge, B, Al, Ga, or In), or a combination thereof.

Such a sulfide-based solid electrolyte may be obtained by, for example, mixing Li₂S and P₂S₅ at a mole ratio of 50:50 to 90:10 or 50:50 to 80:20 and optionally performing heat treatment. Within the above mixing ratio range, a sulfide-based solid electrolyte having excellent ion conductivity may be prepared. The ion conductivity may be further improved by further including SiS₂, GeS₂, B₂S₃, and the like as other components.

A method of mixing sulfur-containing raw materials for preparing a sulfide-based solid electrolyte may be mechanical milling or a solution method. The mechanical milling is a method of mixing the starting materials into microparticles by putting the starting materials and a ball mill in a reactor and vigorously stirring them. In the case of using the solution method, a solid electrolyte can be obtained as a precipitate by mixing the starting materials in a solvent. In addition, in the case of performing heat treatment for the mixture, crystals of the solid electrolyte may be more robust and ion conductivity may be improved. For example, the sulfide-based solid electrolyte may be prepared by mixing sulfur-containing raw materials and heat-treating the same two or more times. In this case, a sulfide-based solid electrolyte having high ion conductivity and robustness may be prepared.

The sulfide-based solid electrolyte particles according to an embodiment, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte can be synthesized through the second heat treatment. Through such two or more heat treatments, a sulfide-based solid electrolyte having high ion conductivity and high performance can be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

For example, the sulfide-based solid electrolyte particles may include argyrodite-type sulfide. The argyrodite-type sulfide may be, for example, represented by the chemical formula, LiₐM_{b}P_{c}S_{d}Aₑ (wherein a, b, c, d, and e are all 0 or more and 12 or less, M is Ge, Sn, Si, or a combination thereof, and A is F, Cl, Br, or I), and as a specific example, it may be represented by the chemical formula of Li₇₋ₓPS₆₋ₓAₓ (wherein x is 0.2 or more and 1.8 or less, and A is F, Cl, Br, or I). Specifically, the argyrodite-type sulfide may be Li₃PS₄, Li₇P₃S₁₁, Li₇PS₆, Li₆PS₅Cl, LisPSsBr, Li_{5.8}PS_{4.8}Cl_{1.2}, Li_{6.2}PS_{5.2}Br_{0.8}, and the like.

The sulfide-based solid electrolyte particles including such argyrodite-type sulfide may have high ion conductivity close to the range of 10⁻⁴ to 10⁻² S/cm, which is the ion conductivity of general liquid electrolytes at room temperature, and may form an intimate bond between the positive electrode active material and the solid electrolyte without causing a decrease in ion conductivity, and furthermore, an intimate interface between the electrode layer and the solid electrolyte layer. An all-solid-state battery including the same may have improved battery performance such as rate capability, coulombic efficiency, and cycle-life characteristics.

The argyrodite-type sulfide-based solid electrolyte may be prepared, for example, by mixing lithium sulfide and phosphorus sulfide, and optionally lithium halide. Heat treatment may be performed after mixing them. The heat treatment may include, for example, two or more heat treatment steps.

A method of preparing a solid electrolyte according to an embodiment includes preparing argyrodite-type sulfide-based solid electrolyte particles by mixing lithium sulfide, phosphorus sulfide, and optionally lithium halide, mixing the prepared argyrodite-type sulfide-based solid electrolyte particles and lithium metal-oxide, and performing heat treatment at 250 °C to 350 °C.

Specifically, the method for preparing the solid electrolyte includes preparing argyrodite-type sulfide-based solid electrolyte particles by mixing lithium sulfide, phosphorus sulfide, and optionally lithium halide and heat-treating, pulverizing the prepared argyrodite-type sulfide-based solid electrolyte particles, mixing the pulverized argyrodite-type sulfide-based solid electrolyte particles and lithium-metal-oxide, and heat-treating at 250 °C to 350 °C.

Herein, in the step of preparing the argyrodite-type sulfide-based solid electrolyte, the heat treatment may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D50) of the sulfide-based solid electrolyte particles according to an embodiment may be less than or equal to 5.0 µm, for example, 0.1 µm to 5.0 µm, 0.1 µm to 4.0 µm, 0.1 µm to 3.0 µm, 0.5 µm to 2.0 µm, or 0.1 µm to 1.5 µm. The sulfide-based solid electrolyte particles having this particle size range can effectively penetrate between positive electrode active materials, and have excellent contact with the positive electrode active material and connectivity between solid electrolyte particles. The average particle diameter of the sulfide-based solid electrolyte particles may be measured using a microscope image, and for example, a particle size distribution may be obtained by measuring the size of about 20 particles in a scanning electron microscope image, and D50 may be calculated therefrom.

### Lithium-metal-oxide

The lithium-metal-oxide according to an embodiment may refer to an oxide including lithium and a metal other than lithium. Herein, the metal is a concept including general metals, transition metals, and semi-metals. In the lithium-metal-oxide, the metal may be one or more elements selected from, for example, Al, B, Ca, Ce, Cr, Fe, Mg, Mo, Nb, Si, Sn, Sr, Ta, V, W, and Zr.

The lithium-metal-oxide may be amorphous. According to an embodiment, when amorphous lithium-metal-oxide is coated on the sulfide-based solid electrolyte particles, the prepared solid electrolyte may realize higher ion conductivity and interfacial resistance with other solid particles such as a positive electrode active material in a battery, prevent aggregation of solid electrolyte particles, improve ion conductivity, and improve capacity characteristics, cycle-life characteristics, and the like.

The lithium-metal-oxide mixed in the method for preparing a solid electrolyte may be in the form of particles, and its average particle diameter (D50) may be, for example, 0.01 µm to 1.0 µm, 0.01 µm to 0.9 µm, 0.01 µm to 0.8 µm, or 0.01 µm and 0.5 µm. An average particle diameter of the lithium-metal-oxide may be smaller than that of the sulfide-based solid electrolyte particles. When using the lithium-metal-oxide having such a particle size range, it can be evenly coated on the surface of the sulfide-based solid electrolyte particles, sufficiently increase ion conductivity of the solid electrolyte and improve moisture stability.

### Solid Electrolyte

In an embodiment, a solid electrolyte includes sulfide-based solid electrolyte particles and lithium-metal-oxide on the surface of the sulfide-based solid electrolyte particles, wherein in an X-ray diffraction (XRD) analysis of the solid electrolyte, a full width at half maximum (FWHM) of a main peak is less than or equal to 0.160.

The lithium-metal-oxide may be present in the form of a film or an island on the surface of the sulfide-based solid electrolyte particle. For example, the solid electrolyte according to an embodiment may include a sulfide-based solid electrolyte particle and a coating layer on the surface of the particle, and the coating layer may include the lithium-metal-oxide.

The solid electrolyte according to an embodiment is a form in which lithium-metal-oxide is coated on the surface of sulfide-based solid electrolyte particles, but the crystallinity of the solid electrolyte is sufficiently high to realize excellent ion conductivity and at the same time to obtain an appropriate particle size distribution without particle aggregation. As the crystallinity of the solid electrolyte increases or the size of the crystal increases, full width at half maximum (FWHM) of the main peak may decrease in X-ray diffraction analysis and the solid electrolyte according to an embodiment has the full width at half maximum of the main peak of less than or equal to 0.160. Herein, the main peak refers to a peak having the highest diffraction intensity in X-ray diffraction analysis. In the X-ray diffraction analysis of the solid electrolyte according to an embodiment, the full width at half maximum of the main peak may be, for example, less than or equal to 0.159, or less than or equal to 0.155. It is known that the ion conductivity is improved if the full width at half maximum is decreased, that is, if the crystallinity is increased, and for example it is understood that as the size of the crystal increases, the grain boundary decreases and the ion conductivity improves.

As described above, the sulfide-based solid electrolyte has particles aggregated or has a large particle size immediately after synthesis, and when it is subjected to a process such as pulverization to adjust it to a particle size usable in a battery, crystallinity thereof may be lowered and ion conductivity may be lowered. In the solid electrolyte according to an embodiment, by heating sulfide-based solid electrolyte particles in a specific temperature range while coating lithium-metal-oxide, the crystallinity may be increased and the full width at half maximum of the main peak may be adjusted to less than or equal to 0.160, and at the same time, to have an even particle size distribution without particle aggregation or growth, improving ion conductivity.

Detailed descriptions of the sulfide-based solid electrolyte particles and the lithium-metal-oxide are omitted as described above.

In the solid electrolyte according to an embodiment, the lithium-metal-oxide may be included in an amount of 0.01 wt% to 3 wt%, for example, 0.01 wt% to 2 wt%, 0.01 wt% to 1 wt%, 0.01 wt% to 0.8 wt%, or 0.1 wt% to 1.0 wt% based on 100 wt% of the solid electrolyte. When the content of lithium-metal-oxide is like this, the solid electrolyte can exhibit an appropriate particle size distribution without particle aggregation while realizing high ion conductivity. In particular, if the content of lithium-metal-oxide satisfies the range of 0.01 wt% to 0.8 wt% based on 100 wt% of the solid electrolyte, the surface of the sulfide-based solid electrolyte particles may be evenly coated with lithium-metal-oxide. Accordingly, the ion conductivity and moisture stability of the solid electrolyte may be further improved, and the efficiency and cycle-life characteristics of the battery may be further improved.

In the solid electrolyte, the lithium-metal-oxide positioned or coated on the surface of the sulfide-based solid electrolyte particles may be in an amorphous form. When the amorphous lithium-metal-oxide is coated, the solid electrolyte exhibits superior ion conductivity and lowers interfacial resistance, thereby improving battery performance.

An average particle diameter (D50) of the solid electrolyte may be 0.1 µm to 5.0 µm, for example, 0.1 µm to 4.0 µm, 0.1 µm to 3.0 µm, 0.5 µm to 2.0 µm, or 0.1 µm to 1.5 µm. Such a solid electrolyte can effectively penetrate between positive electrode active materials, and has excellent contact with the positive electrode active material and connectivity between solid electrolyte particles. The average particle diameter of the solid electrolyte may be measured using a microscope image, and for example, a particle size distribution may be obtained by measuring the size of about 20 particles in a scanning electron microscope image, and D50 may be calculated therefrom.

The solid electrolyte according to an embodiment is characterized by having a uniform particle size distribution without particle aggregation. For example, a value of (D90-D10)/D50 in the particle size distribution for the solid electrolyte may be greater than 1 and less than or equal to 5, for example, 1.1 to 4.0, 1.1 to 3.0, or 1.1 to 2.0. The (D90-D10)/D50 value may indicate a degree of broadness of the peak in the particle size distribution graph for the solid electrolyte, specifically, the horizontal axis represents the particle size (µm) and the vertical axis represents the cumulative volume% of the particles. The smaller the corresponding number, the narrower the peak width of the graph, which may be interpreted as having a uniform particle size. Herein, D10 means a diameter of particles whose cumulative volume is 10 volume% in the particle size distribution, D50 means a diameter of particles whose cumulative volume is 50 volume% in the particle size distribution, and D90 means a diameter of particles whose cumulative volume is 90 volume% in the particle size distribution.

The D10 of the solid electrolyte may be, for example, 0.05 µm to 0.7 µm, 0.05 µm to 0.6 µm, 0.1 µm to 0.5 µm, or 0.2 µm to 0.4 µm. In addition, the D90 of the solid electrolyte may be, for example, 0.9 µm to 5.0 µm, 1.0 µm to 4.0 µm, 1.0 µm to 3.0 µm, or 1.2 µm to 2.0 µm. When the solid electrolyte has such a particle size distribution, battery performance may be improved by realizing high energy density while implementing excellent ion conductivity.

The solid electrolyte may have an ion conductivity of greater than or equal to 2.9 mS/cm at 25 °C, for example, 2.9 mS/cm to 5.0 mS/cm, 3.0 mS/cm to 4.5 mS/cm, or 3.0 mS/cm to 4.0 mS. The ion conductivity may be measured through electrochemical impedance spectroscopy (EIS).

### [Mode for Invention]

Hereinafter, examples of the present invention and comparative examples are described. It is to be understood, however, that the examples are for the purpose of illustration and are not to be construed as limiting the present invention.

### Example 1

### 1. Preparation of sulfide-based solid electrolyte particles

An argyrodite-type sulfide-based solid electrolyte was synthesized through a method described later. All processes of mixing raw materials and pre- and post-heat treatments were performed in a glove box under an argon atmosphere. Specifically, the raw materials of lithium sulfide (Li₂S), phosphorus pentasulfide (P₂S₅), and lithium chloride (LiCl) were mixed in a mole ratio of 2.5:0.5:1, preparing mixed powder. The mixed powder was uniformly mixed with a Henschel mixer and then, primarily fired at 250 °C for 5 hours in a tube furnace through which argon gas was flowing at a constant speed of 8 SLM.

The primarily fired powder was uniformly mixed again with the Henschel mixer, sifted, and then, secondarily fired at 500 °C for 10 hours in the tube furnace through which argon gas was flowing at the constant speed of 8 SLM. The secondarily fired powder was pulverized and sifted, obtaining sulfide-based solid electrolyte particles of Li₆PS₅Cl. This obtained sulfide-based solid electrolyte particles had a size (D50) of 0.85 µm.

### 2. Coating of sulfide-based solid electrolyte particles

100 parts by weight of the prepared sulfide-based solid electrolyte particles and 0.25 parts by weight of lithium-zirconium-oxide (LZO) having D50 of 0.13 µm and being amorphous as a result of X-ray diffraction analysis as a coating agent were mixed with the Henschel mixer. The mixed powder was heat-treated at 250 °C for 5 hours in the tube furnace through which argon gas was flowing at the constant speed of 8 SLM. Through this, a solid electrolyte having the lithium-zirconium-oxide coated on the surface of the sulfide-based solid electrolyte particles was prepared.

### Example 2

A solid electrolyte was prepared in the same manner as in Example 1 except that the content of the coating agent was changed into 0.5 parts by weight.

### Example 3

A solid electrolyte was prepared in the same manner as in Example 2 except that amorphous lithium-aluminum-oxide (LAO; D50 = 0.06 µm) was used as the coating agent.

### Example 4

A solid electrolyte was prepared in the same manner as in Example 2 except that amorphous lithium-titanium-oxide (LTO; D50 = 0.06 µm) was used as the coating agent.

### Example 5

A solid electrolyte was prepared in the same manner as in Example 1 except that the content of the coating agent was changed into 1.0 part by weight.

### Comparative Example 1

A solid electrolyte was prepared in the same manner as in Example 1 except that the coating process through a heat treatment at 250 °C for 5 hours was performed without the coating agent.

### Comparative Example 2

A solid electrolyte was prepared in the same manner as in Example 1 except that the coating process was not performed. In other words, the sulfide-based solid electrolyte particles themselves prepared in the step 1 of Example 1 were used as a solid electrolyte.

Each solid electrolyte of Examples 1 to 5 and Comparative Examples 1 to 2 was designed as shown in Table 1.

**(Table 1)**

| | Additional heat treatment | LZO (parts by weight) | LAO (parts by weight) | LTO (parts by weight) |
|---|---|---|---|---|
| Example 1 | 250 °C | 0.25 | - | - |
| Example 2 | | 0.5 | - | - |
| Example 3 | | - | 0.5 | - |
| Example 4 | | - | - | 0.5 |
| Example 5 | | 1.0 | - | - |
| Comparative Example 1 | | - | - | - |
| Comparative Example 2 | Not | - | - | - |

### Evaluation Example 1: Evaluation of Particle Size Distribution

The solid electrolytes of Examples 1 to 5 and Comparative Examples 1 to 2 were respectively measured with respect to a particle size distribution. The particle size distribution was measured by using xylene, from which moisture was removed, as a solvent and a particle size analyzer using a laser diffraction.

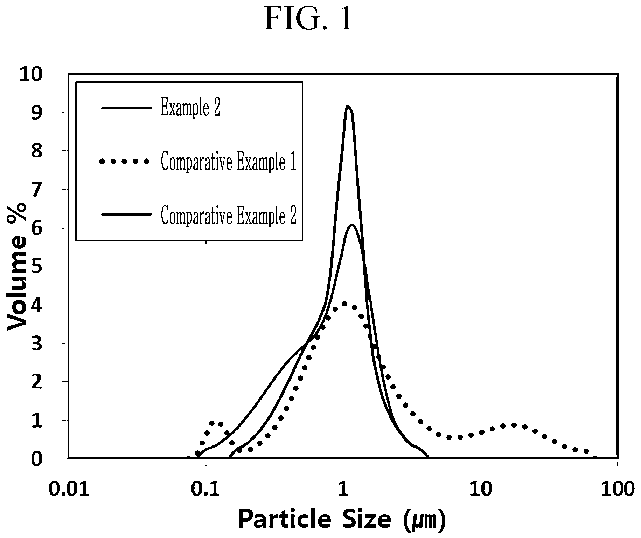

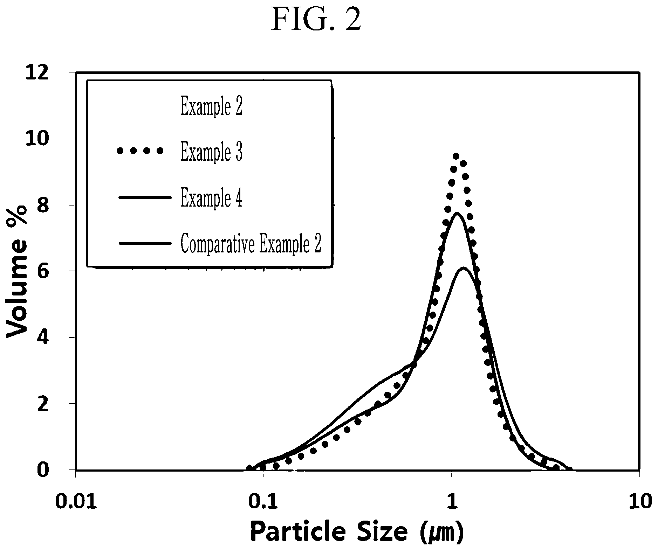

FIG. 1 shows each particle size distribution curve of the solid electrolytes of Example 2 (LZO 0.5), Comparative Example 1 (250 °C-not), and Comparative Example 2 (not-not), and FIG. 2 shows each particle size distribution curve of the solid electrolytes of Example 2 (LZO 0.5), Example 3 (LAO 0.5), Example 4 (LTO 0.5), and Comparative Example 2 (not-not). In the particle size distribution curves of FIGS. 1 and 2, a horizontal axis is a particle size (µm), and a vertical axis is a cumulative volume (volume%) of particles.

In addition, in each particle size distribution of the solid electrolytes of Examples 1 to 5 and Comparative Examples 1 to 2, a cumulative volume 10% as D10, a cumulative volume 50% as D50, and a cumulative volume 90% as D90 are shown in Table 2. Furthermore, (D90-D10)/D50 was calculated to compare wideness of each particle size distribution and then, provided as Span in Table 2.

**(Table 2)**

| unit µm | D10 | D50 | D90 | Span |
|---|---|---|---|---|
| Example 1 | 0.286 | 0.942 | 1.564 | 1.4 |
| Example 2 | 0.387 | 0.938 | 1.556 | 1.2 |
| Example 3 | 0.333 | 0.919 | 1.454 | 1.2 |
| Example 4 | 0.286 | 0.884 | 1.492 | 1.4 |
| Example 5 | 0.355 | 1.112 | 2.327 | 1.8 |
| Comparative Example 1 | 0.369 | 1.144 | 12.890 | 10.9 |
| Comparative Example 2 | 0.260 | 0.848 | 1.644 | 1.6 |

Referring to FIG. 1, Comparative Example 1, in which a heat treatment alone without the coating agent was performed, exhibited several peaks, which confirmed agglomeration of the solid electrolyte particles, compared with Comparative Example 2, which was before the heat treatment. In addition, Table 1 shows that D90 and Span of Comparative Example 1 increased according to the particle agglomeration, compared with Comparative Example 2. In other words, when the heat treatment was additionally performed in order to increase ion conductivity of the pulverized sulfide-based solid electrolyte particles and the like, there was a problem of agglomeration among the particles.

On the contrary, Examples 1 to 5, referring to FIGS. 1 and 2 and Table 2, exhibited very uniform particle size distribution without agglomeration or growth of the particles after the coating.

In addition, this particle size distribution analysis shows that in a final solid electrolyte, coating agent particles were not separately present from the sulfide-based solid electrolyte particles but evenly coated on the surface of the sulfide-based solid electrolyte particles.

### Evaluation Example 2: X-ray Diffraction Analysis

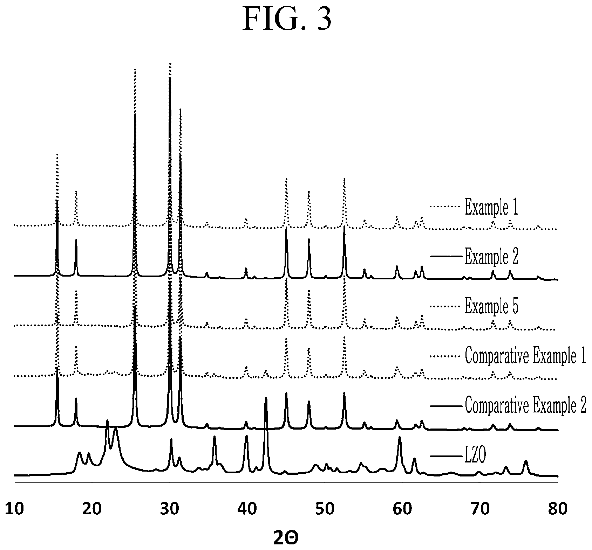

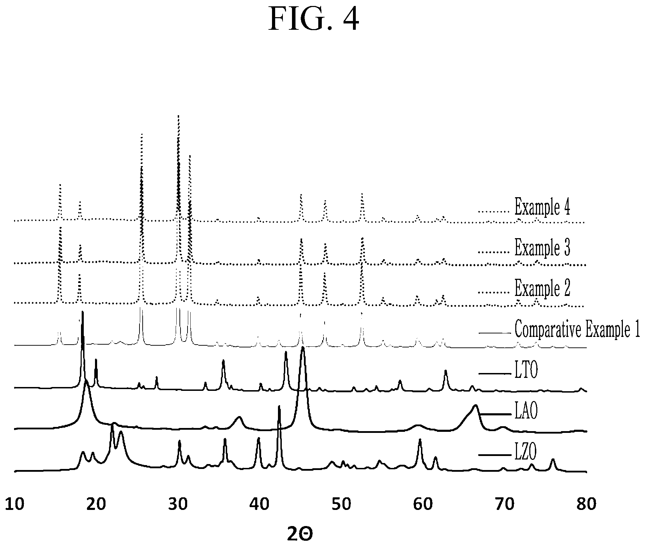

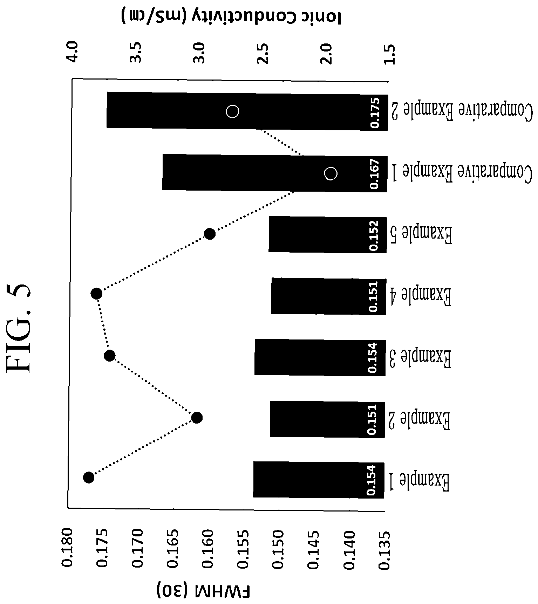

After performing an X-ray diffraction analysis of the solid electrolytes and LZO of Examples 1, 2, and 5 and Comparative Examples 1 and 2, the results are shown in FIG. 3, and also, after performing another X-ray diffraction analysis of the solid electrolytes LZO, LAO, and LTO of Examples 2 to 4 and Comparative Example 1, the results are shown in FIG. 4. In addition, in the X-ray diffraction analysis of the solid electrolytes of Examples 1 to 5 and Comparative Examples 1 to 2, a full width at half maximum at a peak around 30 ° (main peak) where diffraction intensity was highest was calculated and then, shown as a bar graph in FIG. 5.

Referring to FIG. 3, since Examples 1, 2, and 5, in which the LZO coating was performed, exhibited no separate peak of LZO itself and even Example 5 using a high content of the coating agent exhibited no LZO peak, the lithium-zirconium-oxides on the surface of the sulfide-based solid electrolyte particles turned out to have very low crystallinity, that is, to be present in an amorphous state. In FIG. 4 showing the results of using different types of coating agents, since Example 3 exhibited no peak of LAO, and Example 4 exhibited no peak of LTO, the lithium-metal-oxides on the surface of the sulfide-based solid electrolyte particles turned out to be amorphous. Summarizing Evaluation Examples 1 and 2, the lithium-metal-oxides were uniformly coated in an amorphous manner on the surface of the sulfide-based solid electrolyte particles.

In addition, in FIG. 3, Examples 1, 2, and 5 and Comparative Example 1 exhibited a higher diffraction peak than Comparative Example 2 having no coating process, wherein Examples 1, 2 and 5 exhibited a higher diffraction peak than Comparative Example 1 having a heat treatment without the coating agent. Accordingly, when amorphous lithium-metal-oxides were coated and then, heat-treated within a specific temperature range, the coating agent suppressed agglomeration of the solid electrolyte particles and promoted growth of crystals.

Referring to FIG. 5 showing a full width at half maximum of a main peak as a bar graph, Comparative Example 2, which was before a heat treatment, that is, the pulverized sulfide-based solid electrolyte particles before the heat treatment, exhibited a high full width at half maximum of 0.175, but Examples 1 to 5 exhibited a full width at half maximum of less than or equal to 0.155, and accordingly, the full width at half maximum was significantly reduced and thereby, a larger crystal size and higher crystallinity. Comparative Example 1, in which a heat treatment was performed at 250 °C without the coating agent, compared with Comparative Example 2, exhibited a slightly reduced full width at half maximum, which confirmed growth of crystals but a smaller increase in the crystal size than the examples. Comparative Example 1, as in Evaluation Example 1, exhibited agglomeration of the particles, which caused loss of heat energy and less increased the crystal size.

Accordingly, when the sulfide-based solid electrolyte particles were appropriately coated with amorphous lithium-metal-oxides on the surface and heat-treated within a specific temperature range, the solid electrolyte particles were suppressed from aggregation but had an increased crystal size.

### Evaluation Example 3: Evaluation of Ion Conductivity

0.15 g of each solid electrolyte of Examples 1 to 5 and Comparative Examples 1 to 2 was charged and pressed under a pressure of 40 kgf/cm², manufacturing a torque cell. The manufactured cells were calculated with respect to ion conductivity through electrochemical impedance spectroscopy (EIS), and the results are shown as a dotted line graph in FIG. 5. EIS was performed at an amplitude of 10 mV and a frequency of 0.1 Hz to 10⁶ Hz under an air atmosphere at 25 °C. The ion conductivity was calculated by obtaining resistance from a circular arc of a Nyquist plot through EIS and considering a thickness and an area, etc. of each cell.

Referring to FIG. 5, Comparative Example 1, in which an additional heat treatment was performed, compared with Comparative Example 2 having no coating process, exhibited a low full width at half maximum (FWHM) and improved crystallinity but particle agglomeration and thus reduced ion conductivity.

The examples exhibited improved ion conductivity, compared with the comparative examples. Examples 2 to 4, in which different types of coating agents were used all in the same amount, exhibited different crystal growth and ion conductivity of the solid electrolytes according to types of coating agent. The reason is that the coating agent of Example 2 had D50 = 0.13 µm, but the coating agents of Examples 3 and 4 had D50 of 0.06 µm and thus formed coating with a different thickness or shape on the surface of the sulfide-based solid electrolyte particles. Example 5, in which a content of the coating agent was increased, exhibited a little reduced Ion conductivity due to agglomeration of the sulfide-based solid electrolyte particles or resistance on the surface thereof.

### Evaluation Example 4: Evaluation of Moisture Stability

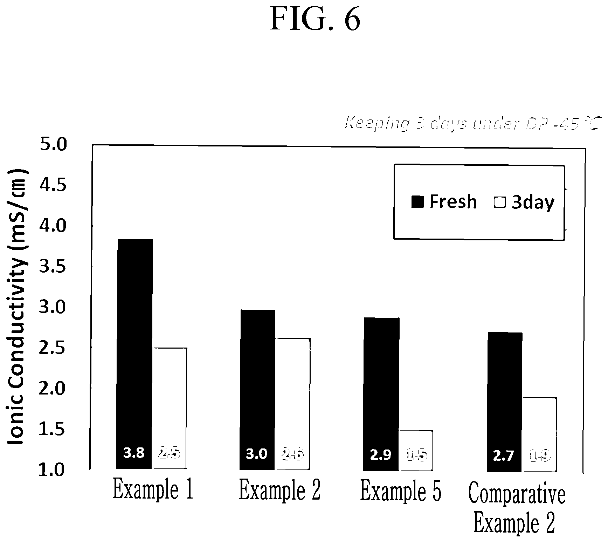

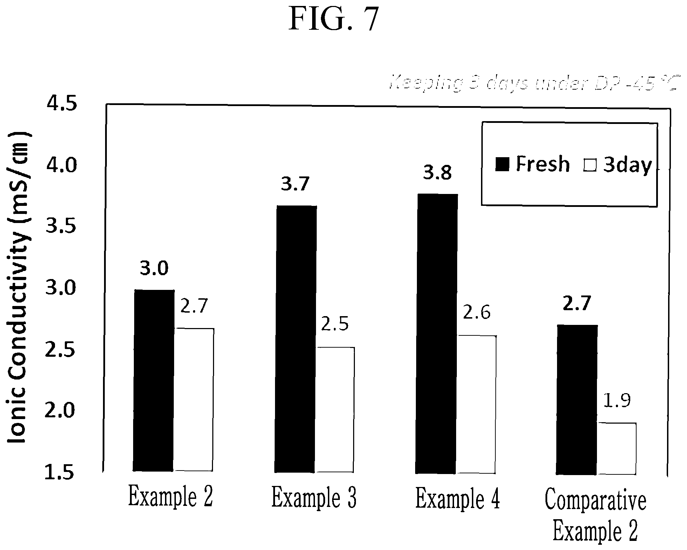

The solid electrolytes of Examples 1 to 5 and Comparative Examples 1 to 2 were allowed to stand in a dry room at a dew point of -45 °C for 3 days and then, measured with respect to ion conductivity in the same manner as in Evaluation Example 3. FIG. 6 shows the results of Examples 1, 2, and 5 and Comparative Example 2, and FIG. 7 shows the results of Examples 2 to 4 and Comparative Example 2. FIGS. 6 and 7 show ion conductivity before allowed to stand as a black bar graph and ion conductivity after allowed to stand as an orange bar graph.

Referring to FIG. 6, when the surface of the solid electrolyte was well protected by the coating agent, stability against moisture enhanced. When the content of the coating agent was small as in Example 1, since the solid electrolyte surface was coated with a thin coating layer or even a lot exposed, which led to insufficient protection, the ion conductivity was initially high but after allowed to stand, significantly decreased. In Example 5, in which the coating agent was used in an excessive content, agglomeration of the coating agent themselves after the heat treatment occurred and increased exposure of the solid electrolyte surface and thereby, reducing ion conductivity after allowed to stand.

Referring to FIG. 7, when the solid electrolyte was appropriately coated and protected with a lithium-metal-oxide on the surface, compared with Comparative Example 2 in which the coating was not performed, moisture stability was improved.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A solid electrolyte, comprising
sulfide-based solid electrolyte particles and the lithium-metal-oxide on the surface of the sulfide-based solid electrolyte particles,
wherein in an X-ray diffraction (XRD) analysis of the solid electrolyte, a full width at half maximum (FWHM) of a main peak is less than or equal to 0.160.

2. The solid electrolyte of claim 1, wherein
in the lithium-metal-oxide, the metal is one or more selected from Al, B, Ca, Ce, Cr, Fe, Mg, Mo, Nb, Si, Sn, Sr, Ta, V, W, and Zr.

3. The solid electrolyte of claim 1, wherein
a content of the lithium-metal-oxide is 0.01 wt% to 3 wt% based on 100 wt% of the solid electrolyte.

4. The solid electrolyte of claim 1, wherein
a content of the lithium-metal-oxide is 0.01 wt% to 0.8 wt% based on 100 wt% of the solid electrolyte.

5. The solid electrolyte of claim 1, wherein
the lithium-metal-oxide is amorphous.

6. The solid electrolyte of claim 1, wherein
the sulfide-based solid electrolyte particles include an argyrodite-type sulfide.

7. The solid electrolyte of claim 1, wherein
an average particle diameter (D50) of the solid electrolyte is 0.1 µm to 5.0 µm.

8. The solid electrolyte of claim 1, wherein
a value of (D90-D10)/D50 in the particle size distribution for the solid electrolyte is greater than 1 and less than or equal to 5.

9. A method for preparing a solid electrolyte, comprising
mixing sulfide-based solid electrolyte particles and lithium-metal-oxide and performing heat treatment at 250 °C to 350 °C.

10. The method of claim 9, wherein
the heat treatment is performed for 0.5 to 10 hours in an inert gas or nitrogen atmosphere.

11. The method of claim 9, wherein
the lithium-metal-oxide is mixed in an amount of 0.01 parts by weight to 3 parts by weight based on 100 parts by weight of the sulfide-based solid electrolyte particles.

12. The method of claim 9, wherein
the lithium-metal-oxide is mixed in an amount of 0.01 parts by weight to 0.8 parts by weight based on 100 parts by weight of the sulfide-based solid electrolyte particles.

13. The method of claim 9, wherein
the sulfide-based solid electrolyte particles include argyrodite-type sulfide.

14. The method of claim 9, wherein
an average particle diameter (D50) of the sulfide-based solid electrolyte particles is 0.1 µm to 5.0 µm.

15. The method of claim 9, wherein
in the lithium-metal-oxide, the metal is one or more selected from Al, B, Ca, Ce, Cr, Fe, Mg, Mo, Nb, Si, Sn, Sr, Ta, V, W, and Zr.

16. The method of claim 9, wherein
the lithium-metal-oxide is amorphous.

17. The method of claim 9, wherein
the lithium-metal-oxide is in the form of particles and an average particle diameter (D50) thereof is 0.01 µm to 1.0 µm.

18. The method of claim 9, wherein
a full width at half maximum (FWHM) of a main peak in the X-ray diffraction analysis of the prepared solid electrolyte is less than or equal to 0.160.

19. The method of claim 9, wherein
the method for preparing a solid electrolyte includes
mixing and heat-treating sulfur-containing raw materials to prepare a sulfide-based solid electrolyte,
pulverizing the prepared sulfide-based solid electrolyte to obtain sulfide-based solid electrolyte particles having an average particle diameter (D50) of 0.1 µm to 5.0 µm, and
mixing sulfide-based solid electrolyte particles and lithium-metal-oxide and performing heat treatment at 250 °C to 350 °C.

20. The method of claim 19, wherein
the mixing and heat-treating of the sulfur-containing raw materials to prepare a sulfide-based solid electrolyte includes a first heat treatment of mixing the sulfur-containing raw materials and firing at 120 °C to 350 °C and a second heat treatment of mixing the first heat treatment result and firing at 350 °C to 800 °C.
